# EUROPEAN PATENT APPLICATION

(11) **EP 1 736 920 A1**
(43) Date of publication of application: **27.12.2006**
(21) Application number: 06425245.5
(22) Date of filing: 07.04.2006
(51) Int. Cl.: G06Q 10/00

(54) **System for managing arms and munitions**

(30) Priority: 03.06.2005 IT RM20050281
(71) Applicant: Sintel Italia S.p.A., 00040 Ardea RM (IT)
(72) Inventor: Polizzi, Gianfranco, 00040 Ardea (RM) (IT)
(74) Representative: Iannone, Carlo Luigi

(57) **Abstract**

The invention concerns a system (1000) for managing articles (200) of arms and munitions, characterised in that it comprises:
- a central elaboration unit (1);
- a database (11) of articles (200) of arms and munitions;
- at least a biometric detector (5) of user identity;
- at least a reader (9) of labels (10) applied on the articles (200),

the central elaboration unit (1) comparing the information provided by said at least a reader (9) of labels (10) and the information provided by said at least a biometric detector (5) of identity with the database (11) in order to effectuate or verify the assignation of the articles (200) to the users.

## Description

The present invention concerns a system for managing arms and munitions.

More in detail, the system according to the invention allow to acquire and co-ordinate the huge amount of information correlated to the assignation of arms to groups or individuals.

Databases are known for the general managing of fluxes and handlings.

These databases are not however particularly efficient in the case of managing armouries, for example military armouries, and turns out to be nothing else than an computerisation of low level of the handling flows.

In order to obtain a raise of level in the computerised management of the armoury handlings, it is necessary to intervene not only in the computerised record of the usual operations, but in the re-definition of their flow, correlating it to the computerised tools that are at disposal from time to time. As "disposable tools" one does not means here the single hardware or software disposable tools, which with time can individually improve, but the set of technical concepts that allow to use such particular tools in order to solve the technical problem put by the management of the armoury handlings.

It is object of the present invention to provide a system for managing arms and munitions which solves the problems and avoid the drawbacks of the relevant prior art.

It is subject-matter of the present invention a system for managing articles of arms and munitions, characterised in that it comprises:
- a central elaboration unit;
- a database of articles of arms and munitions;
- at least a biometric detector of user identity;
- at least a reader of labels applied on the articles,
the central elaboration unit comparing the information provided by said at least a reader of labels and the information provided by said at least a biometric detector of identity with the database in order to effectuate or verify the assignation of the articles to the users.

Preferably according to the invention, the system further comprises one or more peripherals for the direct interaction with said central elaboration unit.

Preferably according to the invention, said one or more peripherals comprise a keyboard and a display.

Preferably according to the invention, the database is modifiable by adding information through said one or more peripherals, and/or through said at least a biometric detector of identity and/or said at least a reader of labels.

Preferably according to the invention, said at least a reader of labels is suited to interact with the transponder comprised in the labels.

Preferably according to the invention, said at least a reader of labels comprises a reader of bar codes.

Preferably according to the invention, said database comprises the list of the labels that are no more usable.

Preferably according to the invention, the database comprises a maximum utilisation time associated to each article, the central elaboration unit emitting an alarm close to or after such a maximum utilisation time.

Preferably according to the invention, said alarm is sent to the user through a internet or phone network connection, respectively utilising an email or SMS message.

Preferably according to the invention, said at least a biometric detector of identity comprises a fingerprints detector.

Preferably according to the invention, said at least a biometric detector of identity comprises an iris scanner.

Preferably according to the invention, the database comprises for each fingerprint or iris scan an identifying string, which is not suited for the reconstruction of the corresponding image.

Preferably according to the invention, said central elaboration unit, said at least a detector of identity and said at least one or more peripherals are integrated in a same support.

Preferably according to the invention, said database is connected, through client/server connection of said central elaboration unit with a general elaboration unit, to a centralised database, to which are connected also other local systems of management of articles of arms and munitions according to the invention.

The invention will be now described, by way of illustration and not by way of limitation, by particularly referring to the drawings of the enclosed Figures, in which:
- figure 1 shows a block diagram of the system according to the invention;
- figure 2 shows a diagram of the assignation process of the arm which uses the system according to the invention;
- figure 3 shows a diagram of an client/server embodiment of the system according to the invention.

In the following description, equal numerical references will be used for indicating equal elements in the figures.

The system according to the invention enables to effectuate all the operations which are each day performed in an armoury, in a more rapid way and above all in a more secure way, chronologically recording every type of handling. Moreover, the system manages the co-ordination of the information concerning the maintenance and the overhauling of the arms and constitutes an efficient archive for knowing, for each user, the attended formation courses, their result, the acquired qualifications, their expiry and the list of the used arms.

TO this end, the system according to the invention effectuates a simplification of the procedures, guarantees the operators, monitors the status of the arms stock at a central level, assesses users and tracks them in their association with the assigned arm.

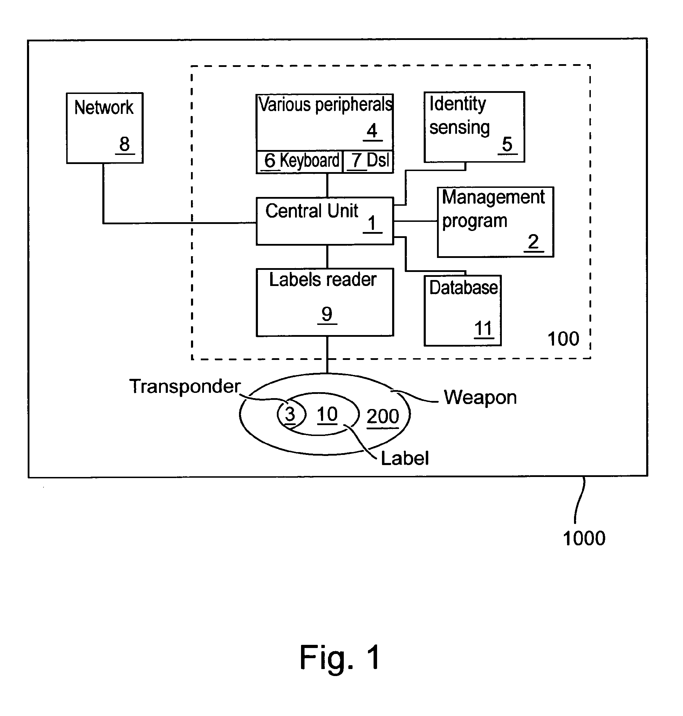

Making reference to figure 1, the system 1000 according to the invention comprises the following parts:
- unit 100 for interfacing, elaboration, and management;
- a databases;
- label reader 9;
- responder or "transponder" 3 of label; and
- managing program 2;

The unit 100 for interfacing, elaboration, and management comprises a central elaboration unit 1 e various peripherals 4, a identity biometric detector 5, in particular of digital print, and performs the following operations for the management of the functionalities of the system:
- acquires the digital prints of the users (or the scanning of the iris, to give another example) for the creation of the customer master in the database 11 and compares it for the subsequent checks;
- identify the labels placed on the arms for the creation of the arms master and compares them in the subsequent handlings;
- provide with the interface to the operator and the gunner and to the customer through the keyboard 6 and a display 7;
- manages the communication with the network 8 and with possible other connected peripherals (printer, scanner, camera).

As mentioned, one of the peripherals utilised by the system is the biometric 5 for the identification of the persons. It can be for example a powerful scanner of the optical type which detects the minor details of the print and codifies the relevant polar co-ordinates in a encrypted and univocal string, that is then inserted in the database. The data so collected in the database 11, enables to identify a person by means of the comparison of two strings, but does not enable the reconstruction of the image of the original print. With such a process, the percentage of false non-recognitions or "False Rejection Rate" (FRR) is less than 0,01%, whilst the percentage of false recognitions or "False Accept Rate" (FAR) is less than 0,001%.

Another peripherals is the reader 9 of labels. It is a contactless reading device, and is able to read the information which are present in the label 10 of an arm 200 (for example bar code or transponder 3).

Still another peripherals is the control keyboard 6 and graphic display 7. They are preferably arranged in a sole support and allow to effectuate the main operative functions.

Concerning the label transponders, it is to be specified that, depending on the use of the arm, they may be of two types.

A first type is the fixed label transponder. It is a transponder of reduced dimensions (diameter 10,2 mm and thickness less than 0.85 mm) and may be easily applied in the grip of the arm. The application has been proved resistant to solvents and even to most recent ultrasonic cleaning systems for the cleaning of the arms.

Another type is the removable label transponder. Its dimensions are definitely larger than the fixed one. It has been studied in order to be easily applicable and removable. It is joined to the arm by means of a small band and offers a flat surface usable for applying suitable labels, facilitating the recognition thereof.

The elaboration unit runs a program which co-ordinates all the assignation operations, arms handling, any reason of exit and entry of the arm in the armoury.

Among its main operative functions, there are the identity check of the users by means of fingerprint, authenticating univocally the drawing of the arm by a party entitled, the verification that the drawing of the arm is effectuated by personnel qualified to this end and univocal determination of the arm, eliminating possible (human) errors of reading of the arm number.

Among its main management functions, the possibility of knowing, in real time, even at the level of general command, how many and which arms are in use or in any case out of the armoury, the co-ordination of the information concerning the maintenance and the overhaul of the arms (the fired shots, the performed overhauls, the time elapsed between an overhaul and the subsequent one), the attended courses and their result, the qualifications (and their expiry) of the included personnel and the list of the used arms.

The management of the time limits uses in particular the available instruments of telecommunication. The time limits can be notified via SMS or e-mail (presetting the suitable connection with optional GSM modem for the former, and the network connection for the latter).

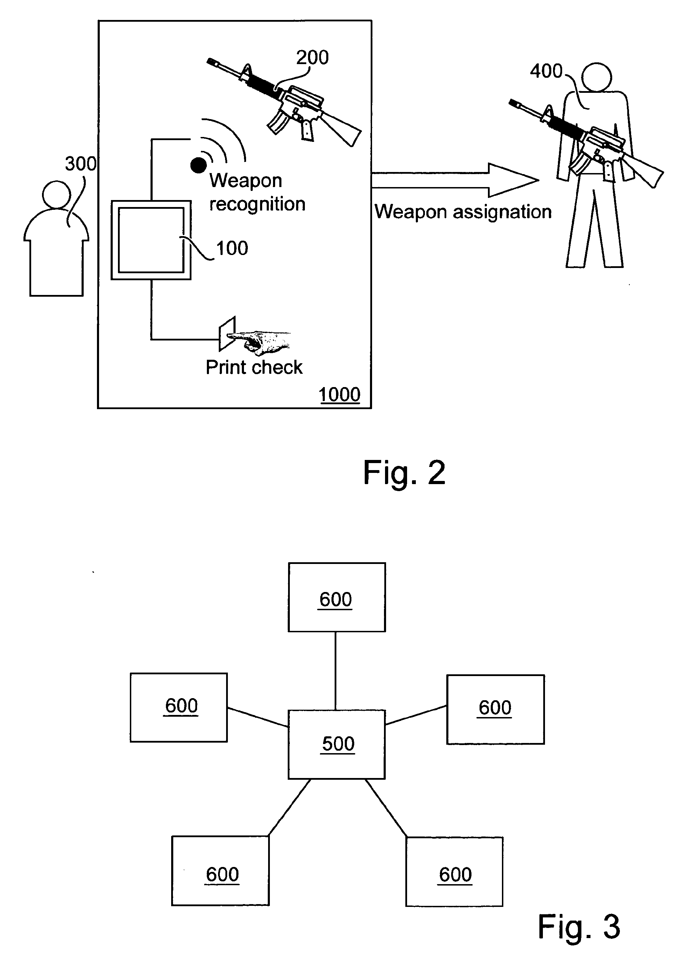

Making reference to figure 2, the management of the assignation comprises the choice of the arm 200 to be assigned, by means of the selection from a list or by means of automated reading of the label, what allows the gunner to verify that the indicated arm in the card is actually the chosen one. The arm then, if free and correctly working (any anomaly is readily indicated to the operator), may be assigned to a person 400 chosen from a list by the operator 300 or searched by means of detecting of the fingerprint. Each of the above-mentioned operations may be performed by the operator or occur in a totally automated way. The operator assigns or removes the assignation of the arm by clicking on the suited confirmation key of the graphic interface. In the graphic interface the list of all the arms possibly already in charge to the soldier is shown.

The management of the handlings by means of program is fully automated. It is used for the input and output handling once these have been assigned to a person. Thanks to this system, an arm cannot go out without first having been given in charge to somebody who will then be the sole to have the credentials to draw it later. In a fully automated way, once let the reader read the arm label, the system propose to the gunner the photo and the personal particulars of the lawful grantee of the arm and prepares itself to the verification of the print. In the positive case, the system authorised the confirmation of proceeding and records the entry or exit of the arm.

Using the system according to the invention it is also possible to manage the armoury in all the situation in which the gunner is absent. The position can be managed by the guard responsible of the armoury keys. The central interfacing and managing unit, through its peripherals, verifies the identity of the one who demands the entrance in the armoury, certifies the occurred delivery of the armoury's key and enables the soldier to choose the arms to be drawn among those at his disposal, through the keyboard. As soon as the typing is terminated, the system starts the counting of a time limit after which, if the key is not returned, it activates a video alarm video for the guard. The soldier who enters the armoury takes the arm and let the reader module placed in the armoury read the label. The system in this way verifies that the taken arm is among those indicated on entry, otherwise generates a video alarm. It is possible at any moment to print the armoury status, then to verify if arms lack, and, in such a case, to whom they belong. At the end of the day, a series of alarms relevant to missed deliveries are in any case generated (with the possibility that from them e-mail and SMS notices are produced).

The labels management by the system allows for example to keep in the memory all the "no more usable" labels (like for example the lost labels) and informs the gunner in case one tries to obtain one of them within the system.

The system according to the invention is further able to generate alarms at some typical time limits of the life of the gunner or soldier. The system enters in an automated way the deadlines at any handling of the arm.

For example in the occasion of a course, the handled and assigned arms shall be assigned an expiration date: the end course date, i.e. the date in which the armoury expects the return of the same. The armoury may insert the date in which he wish to be alerted and the system at such a date shall alert the operator, at the beginning of the procedure, of the forthcoming return. At the same time, the system is able, in case it has been set up, to inform about the imminent expiry the holder of the arm via e-mail or SMS. It is also possible to modify the deadlines, entry them manually and associate to them documents in electronic form and/or acquired by scanner. A typical application of the instrument is the return of an arm, assigned to a student, for leave or illness. The procedure provides that the student takes again the arm at his return. The handling on entry will produce a deadline that will inform the gunner of the future imminent return of the soldier on illness leave. At the same deadline, that is associate to the student and to his arm, it is possible to associate the illness certificate by acquiring it by peripheral (scanner).

With the system according to the invention, one has moreover the possibility of effectuating a supervision of the number of operations performed by the system in a certain period (daily, weekly and monthly), the time intervals needed for the drawing and return of an arm, and a complete and careful report of the different types of operations effectuated by each operator.

A preferred embodiment of the system comprises a personal computer (PC) client equipped with a network card and connection with the server. The one-module hardware interface of the system, i.e. integrated in only one support, allows a greater compactness of the working station. Near the personal computer there are the high-resolution webcam for the taking of the photo of the included personnel, the printer for generating the delivery order, the arms cards and the armoury records and the scanner for the acquisition of the documents of the personnel.

Making reference to figure 3, the system has been conceived in order to be used mainly with a Client/Server architecture, that is with the sharing of a centralised database 500, by different PC local Client 600, on different levels of visibility and enabling. Any modification and/or transaction is effectuated on the central database. It is possible to have a local replica of the data pertinent to the only local situation, so as to allow the performing of the main operations even in the absence of network connection.

The preferred embodiments have been above described and some modifications of this invention have been suggested, but it should be understood that those skilled in the art can make variations and changes, without so departing from the related scope of protection, as defined by the following claims.

## Claims

1. System (1000) for managing articles (200) of arms and munitions, **characterised in that** it comprises:
- a central elaboration unit (1);
- a database (11) of articles (200) of arms and munitions;
- at least a biometric detector (5) of user identity;
- at least a reader (9) of labels (10) applied on the articles (200),
the central elaboration unit (1) comparing the information provided by said at least a reader (9) of labels (10) and the information provided by said at least a biometric detector (5) of identity with the database (11) in order to effectuate or verify the assignation of the articles (200) to the users.

2. System according to claim 1, **characterised in that** it further comprises one or more peripherals (4) for the direct interaction with said central elaboration unit (1).

3. System according to claim 2, **characterised in that** said one or more peripherals (4) comprise a keyboard (6) and a display (7).

4. System according to any claim 1 to 3, **characterised in that** the database (11) is modifiable by adding information through said one or more peripherals (4), and/or through said at least a biometric detector (5) of identity and/or said at least a reader (9) of labels (10).

5. System according to any claim 1 to 4, **characterised in that** said at least a reader (9) of labels (10) is suited to interact with the transponder (3) comprised in the labels (10).

6. System according to any claim 1 to 5, **characterised in that** said at least a reader (9) of labels (10) comprises a reader of bar codes.

7. System according to any claim 1 to 6, **characterised in that** said database (11) comprises the list of the labels (10) that are no more usable.

8. System according to any claim 1 to 7, **characterised in that** the database (11) comprises a maximum utilisation time associated to each article (200), the central elaboration unit (1) emitting an alarm close to or after such a maximum utilisation time.

9. System according to claim 8, **characterised in that** said alarm is sent to the user through a internet or phone network connection (8), respectively utilising an email or SMS message.

10. System according to any claim 1 to 9, **characterised in that** said at least a biometric detector (5) of identity comprises a fingerprints detector.

11. System according to any claim 1 to 9, **characterised in that** said at least a biometric detector (5) of identity comprises an iris scanner.

12. System according to claim 10 or 11, **characterised in that** the database (11) comprises for each fingerprint or iris scan an identifying string, which is not suited for the reconstruction of the corresponding image.

13. System according to any claim 3 to 12, when dependent on claim 2, **characterised in that** said central elaboration unit (1), said at least a detector (5) of identity and said at least one or more peripherals (4) are integrated in a same support.

14. System according to any claim 1 to 13 **characterised in that** said database (11) is connected, through client/server connection of said central elaboration unit (1) with a general elaboration unit (500), to a centralised database, to which are connected also other local systems (600) of management of articles (200) of arms and munitions according to any claim 1 to 13.
